# EUROPEAN PATENT APPLICATION

(11) **EP 2 484 513 A1**
(43) Date of publication of application: **08.08.2012**
(21) Application number: 10818171.0
(22) Date of filing: 20.09.2010
(51) Int. Cl.: B29C 70/10, B29K 7/00, A63B 45/00, B29D 22/02, B29C 35/02

(54) **METHOD FOR MANUFACTURING AN ECOLOGICAL BALL MADE OF A VEGETABLE LAMINATE FOR THE PRACTICE OF SPORTS, ABD SAID BALL PRODUCED BY SEWING, GLUEING/STAMPING OR SEWING/STAMPING**

(30) Priority: 28.09.2009 BR PI0903598
(71) Applicant: Ecológica Indústria E Comércio De Produtos De Latex Ltda, 15310-000 Magda (BR)
(72) Inventor: RODRIGUES, Jaime Marques, 15085-140 São José do Rio Preto (BR)
(74) Representative: Fernandez Lerroux, Aurelio
(86) International application number: PCT/BR2010/000318
(87) International publication number: WO 2011/035401

(57) **Abstract**

The present invention is directed to a method for manufacturing balls made of a vegetable laminate by sewing, sewing/stamping or glueing/stamping for the practice of sports. For producing the ball, the lined vegetable laminate (7), together with the bi-polymer air chamber (4), is subjected to a process comprising the steps of assembling (23), sewing (24), glueing (25) or compression molding (26). The vegetable laminate (2) is obtained by formulating/dyeing (14) the polyisoprene (8), spreading (15) same on the natural substrate (16) or recycled substrate (17), and vulcanizing (18), so as to produce the lined vegetable laminate (7) with a lining (9) made of polyisoprene (8) with natural filaments (10) or recycled filaments (11), impregnating (12) and final vulcanizing (13). The chamber (4) is obtained through the formulation (19) and a first immersion (20) in a polyisoprene polymer (8), a second immersion in 2-methyl-butadiene-1,3 polymer (21), vulcanization (18), and finally the valve (22) is glued. An ecological vegetable ball (1) for the practice of sports is thus obtained, comprising a vegetable laminate (2) that surrounds same and coats the lining (3), and the bi-polymer air chamber (4) comprising a first layer (5) and a second layer (6) disposed inside same.

## Description

### Disclosure of the Invention

The present invention is directed to a sustainable ecological ball made of a vegetable laminate by sewing, sewing/stamping or glueing/stamping, and the relevant process for manufacturing same, the purpose of which is supply the current population consumption need in the acquisition of environment-friendly products. The sustainable vegetal ecological ball uses high technology and is commercially viable, besides being perfectly suitable for the practice of sports and considered as sustainable, since it uses renewable raw material, thus not causing any impact to the environment.

Currently, the existing balls in the market that are manufactured for the practice of sports use toxic solvents in the manufacturing process, have petroleum derived synthetic coverings, or are produced by using animal leather.

The use of toxic solvents in the manufacture of balls causes a negative impact on the health of the workers due to exposition to volatile compounds present in the production process. This situation is an occupational health issue, since the cases of chemical dependence developed by workers who had had contact with such solvents in view of the great toxicity of such products, the presence of unpleasant odors and the lack of safety when handling same are quite common. Moreover, there is a great environmental impact, since tons of toxic residues from solvents are launched into the atmosphere and/or poured on rivers and the ground. An evident lack of attunement with the environmental preservation can be noticed, causing problems such as: increase of tropospheric ozone, greenhouse effect, environmental toxicity, photochemical smog and the eutrofication process.

The problem found in the production of petroleum derived synthetic coverings is that, in addition to the fact that such products are not biodegradable (they generate a disbalance in the nature), the petroleum is a fossil fuel that takes millions of years to be produced, and is a non-renewable power source, that is, a resource that will have its reserves depleted if consumed uncontrollably. The oil refining industry causes great environmental impacts, the consequences of which include the contamination of the water, air and ground. Some potential environmental hazards derived from the operation of oil processing units and derivatives thereof are: water contamination caused by the spill of effluents, wash waters, cooling and leaching waters from the storage areas of materials and waste; discharge of particles from all the process operations into the atmosphere; emission of sulfur oxide and nitrogen gas, ammoniac, acid mists and fluorine compounds; accidental spillage of potentially hazardous solvent and acidic or alkaline materials; contamination of the ground and/or superficial or underground waters due to the inadequate disposal of solid residues from the chemical industry processes, also including the mud from the treatment of water and gaseous effluents and solid particles from dust collectors; changes in the local traffic in view of the circulation of heavy duty trucks (carrying dangerous loads) with the consequent increase of sound pollution that is also caused by the use of equipment and operations that generate loud noises.

The sports balls produced by using animal leather absorb a lot of humidity (affecting the product quality because of the leather permeability) and stimulate to a certain extent the illegal devastation of forests, since cattle breeding is the greatest responsible for such deforestations. The slaughtering of animals to obtain leather generates many issues including those related to spiritual beliefs, causing protests amongst people who do not use any type of leather because they understand that it is obtained only through the sacrifice of animals. Also, there are individuals who defend the ideology according to which the animals suffer in certain confinements, since the manufacturers, in the search for lower fat leather, make efforts in the sense that the animals may not grow in a healthy way.

The process for improving leather in tanneries uses whitewash and sodium sulphide, so it is considered to be highly polluting and the cause of relevant environmental impacts, since the consumption of water, energy and chemicals used in this process generates solid and gaseous residues (launched into the atmosphere) and liquid effluents containing sulfide, chromium, and the like. Finally, the water and chemicals used that do not react thoroughly during the process emanate effluents with both a high degree of contamination and degradation of the environment.

For the purpose of solving such inconveniences, the present invention has developed a sustainable ecological ball of vegetal laminate for the practice of sports made by sewing, sewing/stamping or glueing/stamping, and the relevant process for manufacturing same, produced from latex based vegetal laminate (known for decades as "vegetal leather"), which is extracted from rubber plantations and turned into a substract composed of natural filaments. Said vegetal laminate is found in the marketplace in different versions thickness, colors and stamping.

From such innovations, the invention of the present application provides for the following uses that are not available in the current models:
1) Spread the use of ecological sports balls amongst students, by making them aware of the need to consume sustainable products;
2) Promote and disclose an authentically national product, by stimulating the public/private sector to invest in and develop sustainable national products;
3) Stimulate the demand in the extraction of native latex, thus making it possible for the man to settle in the forest and consequently preserve the native forest;
4) Stimulate the demand in the extraction of cultivated latex in plantations, assuring the commercial reforestation, the generation of direct jobs in the rural area and the generation of indirect jobs linked to the cultivated latex productive chain;
5) Stimulate the communitarian work, involving cooperatives or associations, by distributing the raw material kit for sewing ecological balls;
6) Stimulate the consumption of recyclable products.

The present invention of a sustainable ecological ball of vegetal laminate and the relevant process for manufacturing same provide a product with strong social-environmental attributes that is versatile, resistant and impermeable, as well as capable of replacing the animal leather and synthetic coverings derived from petroleum present in sports balls. The product is fully natural and produced from renewable vegetal raw material, free of harmful residues in the whole production process, besides being able to add an important and interesting social interface to all such environmental virtues.

When said practical sustainable ecological ball of vegetal laminate for the practice of sports is made through sewing, sewing/stamping or glueing/stamping, it is comprised of the vegetal laminate that surrounds same that covers the lining. A bi-polymer air chamber provided with first and second layers is disposed within the lining. All said parts that make out the sustainable ecological ball may be recycled.

The invention can be better understood by reading the following detailed description, consistent with the accompanying figures, wherein:

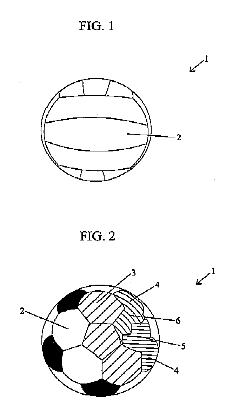

FIGURE 1 represents a front view of a sustainable ecological ball of vegetal laminate;
FIGURE 2 represents a front view showing details of the parts that make out said ball sewn;

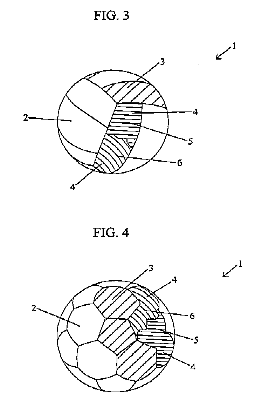

FIGURE 3 represents a front view showing details of the parts that make out the glued/stamped sustainable ecological ball of vegetal laminate;
FIGURE 4 represents a front view showing details of the parts that make out said sewed/stamped ball;

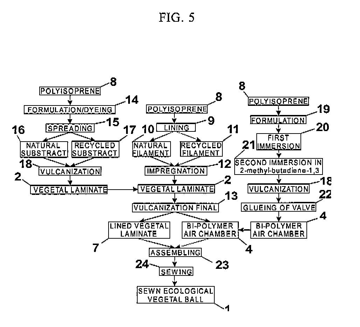

FIGURE 5 represents a flow diagram of the process for manufacturing the sewn sustainable ecological ball of vegetal laminate that presents, through relevant key words, all the stages of the process to be strictly fulfilled;

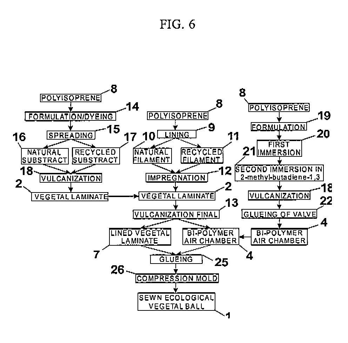

FIGURE 6 represents a flow diagram of the process for manufacturing said glued/stamped ball that presents, through key words, all the stages to be strictly fulfilled;

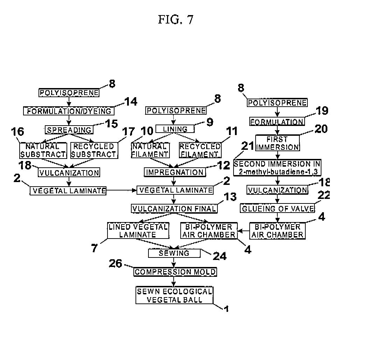

FIGURE 7 represents a flow diagram of the process for manufacturing the sewn/stamped sustainable ecological ball of vegetal laminate that presents, through key words, all the stages to be strictly fulfilled.

With reference to these figures, it can be seen that the sewn, glued/stamped or sewn/stamped vegetal ecological ball (1) is comprised if the vegetal laminate (2), or outer film, within same, that coats the lining (3). A bi-polymer air chamber (4) provided with a first layer (5) and a second layer (6) is placed inside the lining (3). The bi-polymer air chamber (4) is able to expand up to 700% (seven hundred percent) and can attain a maximum pressure of 80 (eighty) pounds.

The bi-polymer air chamber (4) can be of the low resilient or high resilient Cocoon type. The highly resilient bi-polymer air chamber (4) (designed for the volley ball) is coated with natural and/or recycled high tenacity filaments merged into an adhesive compound based on natural polymers, with a maximum pressure of 80 (eighty) pounds, that can be recycled, and the interior of which is empty. The low resilient bi-polymer air chamber (4) (designed for indoor soccer ball) contains natural filaments absorbed with natural polymers (natural substracts) inside same that delay the elasticity by absorbing the impact of the ball, besides attaining a maximum pressure of 80 (eighty) pounds and being prone to recycling.

The present patent also is related to the process for manufacturing said ecological vegetal ball (1). For the production of the glued/stamped or sewn/stamped ecological vegetal ball (1), the lined vegetal laminate (7) and the bi-polymer air chamber (4) are manufactured and undergo a final treatment that varies according to the type (sewn, glued/stamped or sewn/stamped) of ecological vegetal ball (1) produced.

Natural polyisoprene polymer (8), in the Cis-1,4 configuration, is lined (9) by a natural filament substract (10) or recycled filament (11), followed by impregnation (12) of the vegetal laminate (2) that, after the cure through final vulcanization (13) based on organic and inorganic products (that promotes crosslinking in the polymer molecules, enriched by nano-composites), produces the lined vegetal laminate (7), which, together with the bi-polymer air chamber (4), undergoes, as said previously, the final treatment.

The vegetal laminate (2) of the ecological vegetal ball (1) is produced when the natural polyisoprene polymer (8), in the Cis-1,4 configuration, is formulated/dyed (14) through the use of non-toxic organic pigments, followed by spreading (15) the polymer on the natural substract (16) or recycled substract (17), through the cure in a vulcanization system (18) based on organic and inorganic products (which promotes crosslinking in the polymer molecules, enriched by nano-composites).

The bi-polymer air chamber (4) of the ecological vegetal ball (1) is produced, as its name already denotes, in the bi-polymer system, said second (6) layer being formed by a first immersion (20) into polyisoprene polymer (8) in the Cis-1,4 configuration, the polyisoprene (8) having already being formulated (19). As to the first layer (5) of the bi-polymer air chamber (4), it is formed by a second immersion in 2-methyl-butadiene-1,3 polymer (21) enriched with nano-composites. Next, the whole set undergoes the cure in a vulcanization system (18) based on organic and inorganic products (which promotes crosslinkings in the polymer molecules, enriched with nano-composites). After the vulcanization (18), the pressure control valve (22) (in natural rubber modified by nano-composites, with fixed or removable core) is glued in the bi-polymer air chamber (4) by using a natural adhesive.

For the manufacture of the sewn ecological vegetal ball (1), the lined vegetal laminate (7) and the bi-polymer air chamber (4) are assembled (23), and then the sewing step (24) is carried out. In the case of the manufacture of the glued/stamped ecological vegetal ball (1), the lined vegetal laminate (7) and the bi-polymer air chamber (4) are glued (25), and finally compression molded (26). For the manufacture of the sewn/stamped ecological vegetal ball (1), the lined vegetal laminate lined (7) and the bi-polymer air chamber (4) are sewn (24), and finally compression molded (26).

It is concluded that all the creativity and rationality applied to the development of this invention (product and process) provide multiple advantages, attaining the required balance between the quality of the sustainable ecological ball produced, savings in the process of manufacturing same and preservation of the environment. The present invention adds a strong social attribute and commercial competitiveness, thus fulfilling the market demand for environment-friendly products.

## Claims

1. A SUSTAINABLE ECOLOGICAL BALL MADE OF A VEGETABLE LAMINATE FOR THE PRACTICE OF SPORTS, AND SAID BALL PRODUCED BY SEWING, GLUEING/STAMPING OR SEWING/STAMPING, **characterized in that** the ecological vegetal ball (1) is provided with a vegetal laminate (2) surrounding same that coats the lining (3), and a first bi-polymer air chamber (4) provided with a first layer (5) and a second layer (6) disposed inside the lining.

2. A PROCESS FOR MANUFACTURING A SUSTAINABLE ECOLOGICAL BALL MADE OF A VEGETABLE LAMINATE FOR THE PRACTICE OF SPORTS, WHEREIN SAID BALL IS PRODUCED BY SEWING, GLUEING/STAMPING OR SEWING/STAMPING, **characterized in that** the vegetal laminate (2) of the ecological vegetal ball (1) is produced by formulating/dyeing (14) polyisoprene (8), followed by spreading same (15) on the natural substract (16) or recycled substract (17), through vulcanization (18), the vegetal laminate (2) being turned into a lined vegetal laminate (7) by lining (9) polyisoprene (8) on natural filaments (10) or recycled filaments (11), followed by the impregnation (12) of the vegetal laminate (2) which then undergoes the final vulcanization final (13), forming the lined vegetal laminate (7) that together with the bi-polymer air chamber (4) is subjected to a process comprising the steps of assembling (23), sewing (24), glueing (25) or compression molding (26) to finish the production of the ecological vegetal ball (1), the bi-polymer air chamber (4) providing a second layer (6) through a first immersion (20) in polyisoprene polymer (8), after the polyisoprene (8) has been formulated (19) and the first layer (5) through a second immersion in 2-methyl-butadiene-1,3 polymer (21), followed by the vulcanization (18) that is carried out by glueing the valve (22) to said bi-polymer air chamber (4).

3. THE PROCESS FOR MANUFACTURING A SUSTAINABLE ECOLOGICAL BALL MADE OF A VEGETABLE LAMINATE FOR THE PRACTICE OF SPORTS, WHEREIN SAID BALL IS PRODUCED BY SEWING, GLUEING/STAMPING OR SEWING/STAMPING, according to claim 2, **characterized in that** the process for manufacturing the sewn ecological vegetal ball (1) is carried out by assembling (23) the lined vegetal laminate (7) together with the bi-polymer air chamber (4), and then sewing (24).

4. THE PROCESS FOR MANUFACTURING A SUSTAINABLE ECOLOGICAL BALL MADE OF A VEGETABLE LAMINATE FOR THE PRACTICE OF SPORTS, WHEREIN SAID BALL IS PRODUCED BY SEWING, GLUEING/STAMPING OR SEWING/STAMPING, according to claim 2, **characterized in that** the process for manufacturing the glued/stamped ecological vegetal ball (1) is carried out by glueing (25) the lined vegetal plated laminate (7) and the bi-polymer air chamber (4), and then subjecting same to compression molding (26).

5. THE PROCESS FOR MANUFACTURING A SUSTAINABLE ECOLOGICAL BALL MADE OF A VEGETABLE LAMINATE FOR THE PRACTICE OF SPORTS, WHEREIN SAID BALL IS PRODUCED BY SEWING, GLUEING/STAMPING OR SEWING/STAMPING, according to claim 2, **characterized in that** the process for manufacturing the sewn/stamped ecological vegetal ball (1), is carried out by sewing (24) the vegetal plated laminate (7) and the bi-polymer air chamber (4), and then subjecting same to compression molding (26).
